**Europäisches Patentamt**

**European Patent Office**

**Office européen des brevets**

(19)

(11) Veröffentlichungsnummer: **0 106 126 B1**

(12) **EUROPÄISCHE PATENTSCHRIFT**

(45) Veröffentlichungstag der Patentschrift:
03.05.89

(51) Int. Cl.⁴: **G 01 N 1/28**

(21) Anmeldenummer: **83108861.2**

(22) Anmeldetag: **08.09.83**

(54) **Verfahren zur Herstellung von Dünnschnitten biologischer Gewebe und härtbares Infiltrationsmittel für solche Gewebe.**

(30) Priorität: **19.10.82 DE 3238639**

(43) Veröffentlichungstag der Anmeldung:
**25.04.84 Patentblatt 84/17**

(45) Bekanntmachung des Hinweises auf die Patenterteilung:
**03.05.89 Patentblatt 89/18**

(84) Benannte Vertragsstaaten:
**AT BE CH DE FR GB IT LI LU NL SE**

(56) Entgegenhaltungen:
**US-A- 3 537 883**
**US-A- 3 862 300**

**JOURNAL OF ELECTRON MICROSCOPY, Vol. 21, 1972, page 252, Y. SHINAGWA: "Water-cotaining Melamine-Glu taraldehyde Resin Embedding Method";**
**JOURNAL OF ELECTRON MICROSCOPY, Band 27, no. 1, 1978, pp. 13-17, Japanese Society for Electron Microscopy, TOKYO (JP), Y. SHINAGAWA et al.: "Melamine resin as water-containing embedding medium for electron microscopy"**

(73) Patentinhaber: **Bachhuber, Maria Doris, Drosselweg 10, D-7902 Blaubeuren (DE)**

(72) Erfinder: **Bachhuber, Karlheinz, Lauternstrasse 11, D-7906 Blaustein (DE)**
Erfinder: **Frösch, Dieter, Dr., Winterhalde 12, D-7906 Blaustein (DE)**

(74) Vertreter: **Bunke, Holger, Dr.rer.nat. Dipl.-Chem. et al, Patentanwälte Prinz, Leiser, Bunke & Partner Manzingerweg 7, D-8000 München 60 (DE)**

# Beschreibung

Die Erfindung betrifft ein Verfahren zur Herstellung von Dünnschnitten biologischer Gewebe, insbesondere für die Transmissionselektronenmikroskopie, bei dem eine zu untersuchende Gewebeprobe fixiert, durch Infiltration eines mit Wasser mischbaren, härtbaren Mediums entwässert und schließlich in Gießharz eingebettet wird und wobei aus dem nach dem Aushärten des Gießharzes entstandenen Gießling Dünnschnitte geschnitten werden. Die Erfindung betrifft außerdem ein härtbares Infiltrationsmittel für biologische Gewebe, insbesondere für die Präparation von Gewebeproben für die Dünnschnitt-Elektronenmikroskopie, das zur Durchführung des erfindungsgemäßen Verfahrens geeignet ist.

Für die Transmissionselektronenmikroskopie sind ultradünne Schnitte der zu untersuchenden Strukturen erforderlich. Handelt es sich um biologisches Material, insbesondere um Gewebe beliebiger Herkunft, so läßt sich dies nur dann ohne Zerstörung der Gewebe- und Zellstrukturen zu Proben mit einer Dicke von 2–100 nm schneiden, wenn das im Gewebe enthaltene freie Wasser durch ein nichtflüchtiges, gut schneidbares Harz ausgetauscht wird. Grundvoraussetzungen, die ein solches Harz erfüllen muß, sind leichte Verfügbarkeit und Handhabbarkeit, gleichmäßige Reproduzierbarkeit, Löslichkeit im verwendeten Entwässerungsmittel, niedrige Viskosität im nicht ausgehärteten Zustand, gleichmäßige, isotrope Polymerisation, möglichst geringe Volumänderung bei der Polymerisation, gute Schneidbarkeit, Stabilität im Elektronenstrahl und – last not least – geringstmögliche Beeinträchtigung der Struktur des biologischen Materials.

Verfahren der eingangs genannten Gattung sind in großer Zahl bekannt (vgl. «Principles and Techniques of Electron Microscopy» von M. A. Hayat, Verlag Van Nostrand Reinhold, New York, 1970). Vor dem Austausch des Wassers durch ein nicht flüchtiges, gut schneidbares Harz wird die zu untersuchende Gewebeprobe nach bekannten Methoden, die ebenfalls in der genannten Veröffentlichung beschrieben sind, fixiert. Der Austausch des Wassers durch organische Lösungsmittel wird «Entwässerung» und das anschließende Eindringen des Harzes in die Probe «Infiltration» genannt. Das für die Infiltration verwendete härbare Medium wird als Infiltrationsmittel, oft aber auch – nicht ganz korrekt – als «Einbettungsmaterial» oder «Einbettungsmasse» bezeichnet. Der durch Infiltration in das Gewebe erfolgende Wasseraustausch ist jedoch scharf zu trennen von der Einbettung der bereits infiltrierten Gewebeprobe in ein für diesen Zweck bekanntes und geeignetes Gießharz zur Herstellung eines Gießlings, aus dem dann Dünnschnitte herausgeschnitten werden können, bei denen die «Gießharzscheibe» als Objektträger des darin enthaltenen Gewebedünnschnitts fungiert.

Als Infiltrationsmittel hat man bisher, wie bereits erwähnt, stets härtbare Harze verwendet, also Substanzen, die bereits zu Makromolekülen polymerisiert, aber noch nicht durch Vernetzung gehärtet sind und die in einem geeigneten, an die Konstitution und die funktionellen Gruppen des Harzes angepassten Lösungsmittel in ausreichendem Maße löslich sind.

Die zunächst für die Infiltration verwendeten Epoxidharze hatten den Nachteil, daß, weil diese Harze wasserunlöslich sind, vor der Infiltration des Harzes eine Entwässerung des Gewebes mit organischen Lösungsmitteln, meist Aceton oder Äthanol, zwingend erforderlich ist. Der Austausch des Wassers durch Aceton oder Äthanol führt jedoch zur Extraktion von Lipiden und in erheblichem Maße zur Denaturierung von Proteinen. Das letztlich erhältliche elektronenoptische Bild gibt deshalb nicht mehr in hinreichender Näherung den nativen Zustand der Gewebe- und Zellstrukturen wieder.

Man hat deshalb auch schon versucht, als Infiltrationsmittel wasserlösliche Harze bzw. Polymere zu verwenden, insbesondere Polyäthylenglykol und mit Wasser mischbare Acrylate und Methacrylate. Diese Harze erfordern keine vorherige Entwässerung des Gewebes mit organischen Lösungsmitteln, haben aber den Nachteil, daß sie selber neutrale Lipide und Phospholipide in beträchtlichem Maße extrahieren und damit wie ein organisches Lösungsmittel wirken.

Schließlich wurde auch schon vorgeschlagen (vgl. a. a. O., S. 178/179), Harnstoff-Formaldehyd-Addukte, die wasserlöslich bzw. mit Wasser mischbar sind, als wäßriges Infiltrationsmittel zu verwenden. Harnstoff und Formaldehyd reagieren in alkalischer Lösung unter Bildung polymerer härtbarer Harze, die in fast allen Lösungsmitteln, einschließlich Wasser, absolut unlöslich sind. Wenn die Polykondensationsreaktion jedoch in geeigneter Weise künstlich unterbrochen wird, entstehen wasserlösliche polymere Harnstoff-Formaldehyd-Harze, die sich als wäßriges Infiltrationsmittel verwenden lassen. Obwohl diese Harze den Vorteil haben, den Lipidgehalt der Gewebe nicht oder kaum zu verringern, konnten sie sich in der Praxis nicht durchsetzen, weil sie während der Trocknung und Härtung, d. h. während der Vervollständigung der unterbrochenen Polykondensation und der Vernetzung, welche nach dem Wasseraustausch innerhalb des Gewebes stattfinden, in beträchtlichem Maße schrumpfen, wobei sich Sprünge und Risse bilden, die durch Ablenkung des Elektronenstrahls an den Grenzflächen, durch anisotrope Eigenschaften im Rißbereich, durch Dichtegradienten usw. das elektronenoptische Bild stören und verfälschen.

Aus Journal of Electron Microscopy 27, Nr. 1, 1978, S. 13 bis 17, ist ein Verfahren der eingangs genannten Gattung bekannt, bei dem die fixierte Gewebeprobe mit einem Gemisch aus zwei zuvor hergestellten Harnstoff-Formaldehyd-Harzen infiltriert wird. Eines der beiden hierfür verwendeten Harnstoff-Formaldehyd-Harze enthält einen Anteil an Melamin. Die Infiltration erfolgt bei Raumtemperatur während zwei bis drei Stunden, wobei dem Melamin enthaltenden Harnstoff-Formaldehyd-Harz eine beliebige Menge Wasser zugegeben werden kann, um die Infiltration zu beschleunigen. Die beiden Harze werden gewöhnlich im Verhältnis 1 : 1 verwendet.

Der Erfindung liegt die Aufgabe zugrunde, ein Verfahren der eingangs genannten Gattung und ein zur Durchführung eines solchen Verfahrens geeignetes Infiltrationsmittel zu schaffen, mit denen es gelingt, gleichfalls auf das Vorschalten eines Austauschs des in dem Gewebe enthaltenen Wassers durch organische Lösungsmittel zu verzichten und die Nachteile der Harnstoff-Formaldehyd-Methode zu vermeiden, d. h. ein Verfahren und ein Infiltrationsmittel zu schaffen, mit deren Hilfe rißfreie, nicht-spröde Dünnschnitte unter größtmöglicher Erhaltung der nativen Gewebestruktur ohne Herauslösung von Lipiden und ohne Denaturierung von Proteinen hergestellt werden können.

Diese Aufgabe wird erfindungsgemäß dadurch gelöst, daß die fixierte Gewebeprobe in einem Gemisch aus Formaldehyd, Melamin und Wasser, das gegebenenfalls noch ein Mittel zum Einstellen des pH-Werts enthält, erwärmt und gleichzeitig mit der dabei entstehenden wäßrigen Lösung infiltriert wird.

Melamin ist in Wasser verhältnismäßig schlecht löslich: die Löslichkeit L beträgt bei der Temperatur T (in °C): $\log L = -1642/T + 5,101$ (g/100 g Wasser). Formaldehyd ist ein in Wasser leicht lösliches Gas. Erfindungsgemäß wird er aus Praktikabilitätsgründen vorzugsweise als verdünnte wäßrige Lösung (Formalin) oder in kristalliner Form (Paraformaldehyd), die sich in kaltem Wasser langsam, in heißem Wasser und in verdünnter NaOH leicht löst, verwendet.

Wird nun ein Gemisch aus festem Paraformaldehyd oder Formalinlösung, festem Melamin und Wasser erwärmt, so entsteht zunächst eine reine Suspension von festem Melamin in Formalinlösung. Das Melamin löst sich jedoch nach und nach in der Formalinlösung und reagiert mit dem Formaldehyd unter Bildung von Methylolmelaminen. Je nach den eingesetzten stöchiometrischen Mengen an Formaldehyd und Melamin und je nach den sonstigen Reaktionsbedingungen entstehen dabei alle theoretisch möglichen Substitutionsprodukte, vom Monomethylolmelamin bis zum Hexamethylolmelamin. Die Methylolmelamine sind gut wasserlöslich. Aus der anfänglichen Suspension entsteht deshalb beim Erwärmen eine klare wäßrige Lösung mit einer für die Infiltration grundsätzlich erwünschten sehr geringen Viskosität. Die Viskosität beträgt bei 55°C 7–10 mPas (gemessen mit Epprecht Rheomat 15 der Contraves AG, Zürich).

Da die fixierte Gewebeprobe beim erfindungsgemäßen Verfahren in dem Gemisch aus Formaldehyd, Melamin und Wasser erwärmt wird, wird sie im Augenblick der Entstehung der wasserlöslichen Methylolmelamine mit diesen Monomeren, die sich «in statu nascendi» befinden, infiltriert. Da alle nativen Gewebe reaktive, zu Kondensationsreaktionen befähigte funktionelle Gruppen besitzen, insbesondere Hydroxyl-, Carboxyl-, Amino-, Thiol-, Amid-, Estergruppen und dergleichen, werden die in das Gewebe eindringenden wasserlöslichen monomeren Methylolmelamine im Gewebe festgehalten, sei es durch Kondensationsreaktionen, sei es durch van-der-Waals-Kräfte oder dergleichen. Überraschenderweise scheint die Infiltration des Gewebes mit den monomeren Methylolmelaminen, offenbar begünstigt durch innerhalb des Gewebes ablaufende Kondensationsreaktionen, schneller abzulaufen als die konkurrierende Polykondensationsreaktion der monomeren Methylolmelamine untereinander. Denn die polymeren Methylolmelamin-Kondensate werden mit steigendem Kondensationsgrad wasserunlöslich, was sich nach zwei bis 2-½-stündigem Erwärmen des erfindungsgemäß verwendeten Gemischs durch eine leichte Trübung der zunächst entstandenen klaren Lösung bemerkbar macht. Zu diesem Zeitpunkt ist der Wasseraustausch im Gewebe bereits beendet; die Polykondensation der monomeren Methylolmelamine ist deshalb nicht mehr störend, sondern im Gegenteil erwünscht. Sie wird bei der nachfolgenden, nach bekannten Methoden erfolgenden Trocknung des infiltrierten und anschließend in Gießharz eingebetteten Gewebes bis zur vollständigen Aushärtung durch dreidimensionale Vernetzung vervollständigt.

Die erfindungsgemäß behandelten Gewebeproben lassen sich hervorragend schneiden, weisen keine Anisotropie für den hindurchdringenden Elektronenstrahl, sondern hohe Transparenz und Stabilität auf, und sie lassen sich unter optimaler Strukturerhaltung des biologischen Materials herstellen, so daß sie auch allen histochemischen Anforderungen gerecht werden. Für den Fachmann des einschlägigen Gebietes war es zudem völlig überraschend, daß erfindungsgemäß die Plastifizierung von Gewebe mit Hilfe eines modifizierten Aminoplasts ohne Versprödung, d. h. ohne Schrumpfung des Harzes während der Polykondensation, gelungen ist, obwohl alle bisherigen Versuche in dieser Richtung, insbesondere mit Harnstoff-Formaldehyd-Polykondensaten, völlig unbefriedigend verlaufen waren.

Die der Erfindung zugrundeliegende Aufgabe wird ferner durch ein härtbares Infiltrationsmittel für biologische Gewebe, insbesondere für die Präparation von Gewebeproben für die Dünnschnitt-Elektronenmikroskopie gelöst, welches monomere, wasserlösliche Methylolmelamine oder deren wäßrige Lösungen enthält und vorzugsweise aus solchen monomeren Methylolmelaminen oder deren wäßrigen Lösungen besteht. Das erfindungsgemäße Infiltrationsmittel kann aber auch neben den monomeren Methylolmelaminen gegebenenfalls zusätzlich noch bekannte, mit Wasser mischbare Harze oder Harzlösungen, wie sie beispielsweise in der erwähnten Veröffentlichung beschrieben sind, oder auch niedrig kondensierte oligomere oder polymere Methylolmelamin-Kondensate, sofern sie noch mit Wasser mischbar sind, enthalten.

Bei einem vorteilhaften Ausführungsbeispiel des erfindungsgemäßen Verfahrens enthält das Gemisch, in dem die Gewebeprobe erwärmt wird, Formaldehyd und Melamin in einem Molverhältnis von 2 : 1 bis 8 : 1, vorzugsweise im Molverhältnis von 6 : 1, bei dem sich in erster Linie Trimethylolmelamin und Hexamethylolmelamin bilden, welche beide besonders gut wasserlöslich sind und zu wäßrigen Lösungen mit besonders niedriger Viskosität (weniger als 60 mPas bei 25 °C) führen.

Das die Gewebeprobe enthaltende Gemisch wird vorzugsweise mindestens eine Stunde lang auf eine Temperatur zwischen 30 und 60 °C erwärmt. Die besten Ergebnisse wurden bei einer Erwärmungs- und Einwirkungsdauer von 1 bis 3 Stunden und bei einer Temperatur von etwa 50 bis 60 °C erzielt; bei dieser Temperatur löst sich das Melamin bei einem Molverhältnis von 1 : 6 (Melamin/Formaldehyd) in etwa 20 Minuten in 37–40%iger wäßriger Formalinlösung.

Bei einem weiteren vorteilhaften Ausführungsbeispiel des erfindungsgemäßen Verfahrens wird das Gemisch durch Zusatz einer wäßrigen Base, beispielsweise 0,1 N-NaOH oder –KOH, auf pH > 7, vorzugsweise auf einen pH-Wert zwischen 8 und 9, eingestellt. Das Verfahren läßt sich jedoch auch in neutraler und saurer Lösung durchführen. Zur Einstellung des pH-Werts im sauren Bereich wird eine verdünnte wäßrige Lösung einer organischen, ein- oder zweibasigen Säure oder aber einer Mineralsäure verwendet.

Nach Vollendung des Wasseraustauschs, also nach einer Erwärmungszeit von etwa 1 bis 3 Stunden, wird die infiltrierte Gewebeprobe aus dem Reaktionsgemisch entnommen, in eine Gießform übergeführt und in ein beliebiges, zu diesem Zweck bekanntes Gießharz eingebettet, welches dann in an sich bekannter Weise in mehreren Stufen getrocknet wird, wodurch sowohl das Infiltrationsmittel als auch das als Einbettmasse verwendete Gießharz vollständig auspolymerisieren und durch dreidimensionale Vernetzung aushärten. Die mehrstufige Trocknung dauert mehrere Tage und beginnt meist in einem Exsikkator, der mit einem nicht flüchtigen Trocknungsmittel wie Silicagel oder Calciumchlorid beschickt ist, und zwar bei einer Temperatur, die nur 10 bis 15° über Raumtemperatur liegt, und wird dann bei höheren Temperaturen im Trockenschrank fortgesetzt. Durch den Wasserverlust beim Trocknen senken sich zunächst die Gießharzblöcke, das noch nicht auspolymerisierte und noch nicht vernetzte Harz kann in dieser Trocknungsttufe aber noch nachfließen, so daß es bei der eigentlichen Härtung überraschenderweise zu keinem nennenswerten Schrumpf kommt.

Erfindungsgemäß wird als Gießharz vorzugsweise Melaminharz verwendet. Besonders bevorzugt wird dabei eine wäßrige Methylolmelaminäther-Lösung verwendet, die gegebenenfalls noch 10–20 Gew.-% Polyäthylenglykol mit einem mittleren Molekulargewicht von etwa 10 000 enthält, aber auch andere bekannte Polyglykole oder Zusätze an anderen bekannten Gießharzen enthalten kann. Besonders geeignete Gießharze sind die Methylolmelamin-methyläther und andere -niedrigalkyläther. Schließlich werden aus den getrockneten, vernetzten, ausgehärteten Gießharzblöcken, die die jeweils zu untersuchende, durch Polykondensation und Härtung des Infiltrationsmittels plastifizierte Gewebeprobe enthalten, mit dem Diamanten bei normalem Messerwinkel und Schneidgeschwindigkeiten von 0,5 bis 2 mm/s ultradünne Schnitte herausgeschnitten, die direkt aus dem Wasserbad auf die hierzu üblicherweise verwendeten feinen Kupfernetze, die nicht mit einer dünnen Schutzfolie beschichtet zu sein brauchen, aufgenommen und elektronenmikroskopisch untersucht.

Die Erfindung wird anhand des folgenden Beispiels in Verbindung mit den Ansprüchen weiter erläutert:

Beispiel 1

Stücke von Leber, Hypophyse, Retina und Zwerchfellmuskel der Ratte wurden 2–6 Stunden in einer wäßrigen Lösung fixiert, die 1 Gew.-% Glutaraldehyd, 1 Gew.-% Gerbsäure, gelöst in 0,1 m-Phosphatpuffer, pH 7,2, dessen Osmolarität mit Saccharose auf 330 mosm eingestellt war, enthielt. Die fixierten Gewebeproben wurden in aqua bidestillata gewaschen und zur Kontrastierung 24 Stunden lang bei 40 °C in der Dunkelheit in eine wäßrige 1%-ige Uranylacetatlösung verbracht. Danach wurden die Proben wieder in aqua bidestillata gewaschen und anschließend in ein Schraubdeckelgläschen gegeben, das ein Gemisch aus 0,01 Mol Melamin u. 0,06 Mol Formaldehyd in Form einer 37%-igen wäßrigen Formalinlösung enthielt, das mittels 0,1 m-NaOH auf pH 8,4 eingestellt worden war. Das Gläschen wurde unter ständigem langsamem Rotieren zwei Stunden lang im Wasserbad auf etwa 55 °C erwärmt. Nach etwa 20 Minuten war aus der anfänglichen Suspension eine klare wäßrige Lösung geworden. Nach etwa 2 Stunden machte sich eine leichte Trübung bemerkbar, was die Beendigung des Wasseraustausches in den Gewebeproben und die zunehmende Polymerisation bzw. Kondensation der monomeren Methylolmelamine anzeigte. Die Proben wurden dann aus der Reaktionslösung entnommen und in Silicon-Gießformen übergeführt, welche mit einer 50%-igen wäßrigen Lösung von mit Phosphorsäure auf pH 5 bis 6 eingestelltem Methylolmelaminäther-Harz, das zuvor zur Vermeidung von Luftblasen evakuiert wurde, gefüllt waren. Bei einem Teil der Proben wurde den Gießharzlösungen noch 10 bis 20 Gew.-% Polyäthylenglykol mit einem mittleren Molekulargewicht von 10 000 zugegeben.

Die Härtung der Gießlinge erfolgte durch Trocknung in drei Stufen: Zunächst wurde im Exsikkator (Silicagel) 2 Tage lang bei 40 °C, danach ohne Exsikkator im Trockenschrank bei 60 °C weitere 2 Tage und schließlich noch 4 Stunden lang im Trockenschrank bei 80 °C getrocknet. Durch den Wasserverlust sinkt die Oberfläche der Blöcke in den Gießformen ein, die Härtung des Harzes erfolgt aber ohne Schrumpf. Aus den ausgehärteten Blöcken werden mit dem Diamanten ultradünne Schnitte herausgeschnitten.

Die als Gießharz verwendete Methylolmelaminätherlösung wird wie folgt hergestellt:

126 g (1 Mol) Melamin werden mit 450 g (6 Mol) 40%-iger Formalinlösung vermischt, und die Mischung wird mit 1 N-NaOH auf pH 8,5 eingestellt und auf 80 °C erhitzt. Das Melamin löst sich hierbei unter Bildung von Hexamethylolmelamin. Zu der entstandenen Hexamethylolmelamin-Lösung wird eine Lösung aus 0,5 g Oxalsäure in 320 g (10 Mol) Methanol zugegeben und das ganze 10 bis 15 Minuten lang unter Rückfluß zum Sieden erhitzt. Dabei wird das Hexamethylolmelamin teilweise mit Methanol veräthert. Danach wird die Lösung wieder mit 1 N-NaOH auf pH 8,5 eingestellt, unter vermindertem Druck bei einer Badtemperatur von ca. 50 °C am Rotationsverdampfer eingeengt, bis praktisch kein Lösungsmittel mehr übergeht. Die zurückbleibende, leicht trübe Lösung wird in 400 ml Chloroform aufgenommen und 24 Stunden im Scheidetrichter belassen. Das restliche, im Rückstand verbliebene Wasser setzt sich oben ab, während sich der größte Teil des Harzes in der Chloroformphase befindet. Die Chloroformphase wird abgetrennt, das Lösungsmittel wird im Rotationsverdampfer abgezogen, der Rückstand in Wasser aufgenommen und erneut im Rotationsverdampfer unter vermindertem Druck gehalten, bis die Lösung vollständig chloroformfrei ist. Die fertige Lösung wird bis zu einem Harzgehalt von 50 Gew.-% mit Wasser verdünnt. Die klare Lösung ist in jedem Verhältnis mit Wasser mischbar, frei von Salzen und viele Monate lang bei Raumtemperatur stabil.

Beispiel 2

In einem Schraubdeckelgläschen werden 1/100 Mol Melamin und 6/100 Mol Formaldehyd als 37%ige Lösung von Paraformaldehyd in $H_2O$ mit 2%iger Phosphorsäure auf pH < 7, vorzugsweise 5,5–6,5, eingestellt. Nach Zugabe beliebiger Gewebeproben werden diese bei 30–60 °C, vorzugsweise bei 55 °C, unter langsamem Drehen infiltriert, wobei sich das Melamin nach 10–20 Min. gelöst hat und der gesamte Vorgang 1 Std. dauern soll. Eine Trübung der Lösung darf dabei nicht auftreten. Aus der so erhaltenen Lösung werden die Proben entnommen und in Siliconformen übergeführt. Auf die Proben kommt zusätzlich je ein Tropfen von ca. 25 µl Inkubationslösung, welcher die Gewebestücke vollständig bedecken soll. Die Weiterbehandlung erfolgt anschließend ohne Exsikkator im Wärmeschrank während 24 Std. bei 60 °C. Infiltration und Härtung sind danach vollständig abgeschlossen. Die Gewebeprobe liegt in einem kleinen Plättchen vor, umgeben von ausgehärtetem Melaminharz. Zur besseren Handhabung bei der Herstellung von Dünnschnitten wird dieses Plättchen (überschüssiges Harz kann vorher vorsichtig abgetrennt werden) in Epoxid oder irgendein anderes verfügbares Gießharz eingebettet. Dieses Gießharz hat auf die Gewebeprobe keinerlei Einfluß, es dient ausschließliche dem Festhalten. Nach Trimmen der Blöcke können mit dem Diamanten oder Glasmesser Dünnschnitte bei normalem Messerwinkel hergestellt werden. Mit dieser Ausführungsform des erfindungsgemäßen Verfahrens lassen sich auf einfachste Weise auch einwandfreie Schnitte besonders schwer schneidbarer Gewebe, wie etwa des Gehirns, herstellen.

Das erfindungsgemäße Infiltrationsmittel wird vorzugsweise in Form eines «Kit» verwendet, eines Reagenziensatzes, der in getrennten Behältnissen stöchiometrische Mengen an Melamin, Formaldehyd und Wasser enthält, so daß der Inhalt der einzelnen Behältnisse zur Herstellung der Infiltrations- oder «Inkubations»-Lösung nur noch vereinigt zu werden braucht. Besonders vorteilhaft ist ein Reagenzsatz, der in getrennten Behältnissen stöchiometrische Mengen an Melamin und einer verdünnten, wäßrigen, ggf. ein Mittel zum Einstellen des pH-Werts enthaltenden, Formalinlösung enthält.

**Patentansprüche**

1. Verfahren zur Herstellung von Dünnschnitten biologischer Gewebe, insbesondere für die Transmissionselektronenmikroskopie, bei dem eine zu untersuchende Gewebeprobe fixiert, durch Infiltration eines mit Wasser mischbaren, härtbaren Mediums entwässert und schließlich in Gießharz eingebettet wird und wobei aus dem nach dem Aushärten des Gießharzes entstandenen Gießling Dünnschnitte geschnitten werden, dadurch gekennzeichnet, daß die fixierte Gewebeprobe in einem Gemisch aus Formaldehyd, Melamin und Wasser, das gegebenenfalls noch ein Mittel zum Einstellen des pH-Werts enthält, erwärmt und gleichzeitig mit der dabei entstehenden wäßrigen Lösung infiltriert wird.

2. Verfahren nach Anspruch 1, dadurch gekennzeichnet, daß die Gewebeprobe in einem Gemisch erwärmt wird, das Formaldehyd und Melamin im Molverhältnis von 2 : 1 bis 8 : 1, vorzugsweise von 6 : 1, enthält.

3. Verfahren nach Anspruch 1 oder 2, dadurch gekennzeichnet, daß das die Gewebeprobe enthaltende Gemisch mindestens eine Stunde lang auf eine Temperatur zwischen 30 und 60 °C erwärmt wird.

4. Verfahren nach einem der Ansprüche 1 bis 3, dadurch gekennzeichnet, daß das Gemisch auf 50–60 °C erwärmt wird.

5. Verfahren nach einem der Ansprüche 1 bis 4, dadurch gekennzeichnet, daß das Gemisch durch Zusatz einer wäßrigen Base auf pH > 7, vorzugsweise auf einen pH-Wert zwischen 8 und 9, eingestellt wird.

6. Verfahren nach einem der Ansprüche 1 bis 5, dadurch gekennzeichnet, daß die infiltrierte Gewebeprobe in Melaminharz eingebettet wird.

7. Verfahren nach Anspruch 6, dadurch gekennzeichnet, daß man zum Einbetten eine wäßrige Methylolmelaminäther-Lösung verwendet.

8. Verfahren nach Anspruch 7, dadurch gekennzeichnet, daß man zum Einbetten eine wäßrige Methylolmelaminäther-Lösung verwendet, die zusätzlich 10–20 Gew.-% Polyäthylenglykol enthält.

9. Härtbares Infiltrationsmittel zur Durchführung des Verfahrens gemäß einem der Ansprüche 1 bis 8, enthaltend monomere wasserlösliche Methylolmelamine oder deren wäßrige Lösungen.

10. Härtbares Infiltrationsmittel nach Anspruch 9, bestehend aus einem Reagenziensatz, der in getrennten Behältnissen stöchiometrische Mengen an Melamin, Formaldehyd und Wasser enthält.

11. Infiltrationsmittel nach Anspruch 10, dadurch gekennzeichnet, daß der Reagenzsatz in getrennten Behältnissen stöchiometrische Mengen an Melamin und einer verdünnten wäßrigen, ggf. ein Mittel zum Einstellen des pH-Werts enthaltenden, Formalinlösung enthält.

## Claims

1. A process for the preparation of thin sections from biological tissues, particularly for transmission electron microscopy, comprising fixing a tissue sample to be investigated, dehydrating same by infiltration of said fixed tissue sample with a hardenable medium miscible with water, subsequently embedding said sample in a casting resin, and cutting thin sections from the cast body as obtained upon curing of said casting resin, characterized in that said fixed tissue sample is warmed in a mixture of formaldehyde, melamine and water, optionally containing a pH adjusting agent, and is simultaneously infiltrated by the aqueous solution being formed therewith.

2. The process of claim 1, wherein said tissue sample is warmed in a mixture containing formaldehyde and melamine in a mole ratio of from 2 : 1 to 8 : 1, preferably of 6 : 1.

3. The process of claim 1 or 2, wherein said mixture containing said tissue sample is warmed for at least one hour at a temperature of from 30 to 60 °C.

4. The process of any one of claims 1 to 3, wherein said mixture is warmed to 50 to 60 °C.

5. The process of any one of claims 1 to 4, wherein said mixture is adjusted to a pH of greater than 7, preferably to a pH value of between 8 and 9, by the addition of an aqueous base.

6. The process of any one of claims 1 to 5, wherein said infiltrated tissue sample is embedded in a melamine resin.

7. The process of claim 6, wherein an aqueous methylolmelamine ether solution is used for said embedding.

8. The process of claim 7, wherein an aqueous methylolmelamine ether solution additionally containing from 10 to 20% by weight of polyethylene glycol is used for said embedding.

9. A hardenable infiltration medium for carrying out the process according to any one of claims 1 to 8, containing monomeric water-soluble methylolmelamines or aqueous solutions thereof.

10. The hardenable infiltration medium of claim 9, consisting of a kit of reagents comprising stoichiometric quantities of melamine, formaldehyde and water, each in separate receptacles.

11. The infiltration medium of claim 10, wherein said kit of reagents comprises, each in separate receptacles, stoichiometric quantities of melamine and of a diluted aqueous solution of formalin, optionally containing a pH adjusting agent.

## Revendications

1. Procédé de préparation des coupes fines de tissus biologiques, en particulier pour la microscopie électronique à transmission, de manière qu'un spécimen de tissu prévu à l'analyse est fixé, déshydraté par infiltration d'un médium hydrophile et durcissable et enfin inclus dans une résine, et où des sections fines sont coupées du bloc formé dans la suite de l'endurcissement de la résine, caractérisé en ce que le spécimen de tissu fixé est chauffé dans une mixture d'aldéhyde formique, mélamine et eau, contenant le cas échéant un moyen pour ajuster la valeur de pH, et en même temps infiltré par la solution aqueuse en voie de formation.

2. Procédé selon la revendication 1, caractérisé en ce que le spécimen de tissu est chauffé dans une mixture, contenant de l'aldéhyde formique et de la mélamine en des proportions molaires de 2 : 1 jusqu'à 8 : 1, de préférence 6 : 1.

3. Procédé selon la revendication 1 ou 2, caractérisé en ce que la mixture contenant le spécimen de tissu est chauffée pendant au moins 1 heure à une température entre 30 et 60 °C.

4. Procédé selon une des revendications 1 à 3, caractérisé en ce que la mixture est chauffée à 50–60 °C.

5. Procédé selon une des revendications 1 à 4, caractérisé en ce que la valeur de pH de la mixture est ajustée à > 7, de préférence entre 8 et 9, en ajoutant une base aqueuse.

6. Procédé selon une des revendications 1 à 5, caractérisé en ce que le spécimen de tissu infiltré est inclus dans une résine de mélamine.

7. Procédé selon la revendication 6, caractérisé en ce que l'on utilise une solution aqueuse de méthylène-mélamine-éther pour inclusion.

8. Procédé selon la revendication 7, caractérisé en ce que l'on utilise pour inclusion une solution aqueuse de méthylène-mélamine-éther, contenant en outre 10–20% (du poids) de polyéthylène-glycol.

9. Matière durcissable pour infiltration, destinée à effectuer le procédé selon une des revendications 1 à 8, contenant des méthylène-mélamines hydrosolubles monomères ou ses solutions aqueuses.

10. Matière durcissable pour infiltration selon la revendication 9, consistant en un assortiment de réactifs, contenant des quantités stoichiométriques de mélamine, d'aldéhyde formique et d'eau dans des compartiments séparés.

11. Matière pour infiltration selon la revendication 10, caractérisée en ce que l'assortiment de réactifs contient des quantités stoichiométriques de mélamine et d'une solution diluée de formaline aqueuse, contenant le cas échéant un moyen pour ajuster la valeur pH.